Europäisches Patentamt

(19) European Patent Office

Office européen des brevets

(11) Numéro de publication: **0 051 034**
**A1**

(12) **DEMANDE DE BREVET EUROPEEN**

(21) Numéro de dépôt: **81401718.2**

(22) Date de dépôt: **28.10.81**

(51) Int. Cl.³: **B 32 B 27/08**
**B 65 D 65/40, B 32 B 31/28**

(30) Priorité: **28.10.80 FR 8022992**

(43) Date de publication de la demande:
**05.05.82 Bulletin 82/18**

(84) Etats contractants désignés:
**AT BE CH DE GB IT LI LU NL SE**

(71) Demandeur: **Bean, Gérard**
**4, square des Carrières**
**Rambouillet (Yvelines)(FR)**

(72) Inventeur: **Bean, Gérard**
**4, square des Carrières**
**Rambouillet (Yvelines)(FR)**

(74) Mandataire: **Rataboul, Michel**
**Cabinet Michel Rataboul 69, rue de Richelieu**
**F-75002 Paris(FR)**

(54) **Pellicule multi-couches destinée à constituer une enveloppe thermo-rétractable.**

(57) La pellicule est caractérisée en ce qu'elle comprend au moins deux couches 100-400 dont l'une 100 est réticulée ("substrat") et l'autre 400 ne l'est pas (couche "de contact"). Elles sont obtenues par extrusion de la couche de contact 400 sur la face extérieure du substrat 100 puis elles sont inversées avant utilisation pour que la couche de contact 400 soit contre les produits à emballer et que le substrat réticulé 100 soit à l'extérieur.

./...

EP 0 051 034 A1

Fig.3

1

Pellicule multi-couches destinée à constituer une enveloppe thermo-
rétractable.

On connait le procédé de conditionnement sous vide qui consiste à
placer le produit à emballer dans une enveloppe dans laquelle on fait le
vide puis que l'on soumet, après fermeture, à une opération de thermo-rétractation bi-directionnelle en immergeant l'ensemble dans un fluide relativement chaud tel que de l'eau portée à 90°C environ pendant un temps relativement court de quelques secondes.

Ce procédé suppose que le matériau qui constitue l'enveloppe satisfasse à des exigences contradictoires telles que la résistance à la chaleur et la faculté de soudure par exemple.

En outre, lorsqu'il s'agit d'emballer des produits alimentaires, il
est indispensable que le matériau qui constitue l'enveloppe soit neutre
chimiquement, non-toxique, en un mot, "alimentaire" au sens de la législation en vigueur.

Il faut également que le matériau soit suffisamment souple pour
constituer une sorte de seconde peau qui épouse le plus précisément possible les contours du produit à emballer, mais qu'il soit très solide et résiste notamment à l'abrasion, perforations, chocs, etc.

Ces considérations ont donc conduit à utiliser, non par une pellicule unique quelle que soit son épaisseur, mais un "complexe" composé d'au
moins deux couches associées intimement et de caractéristiques différentes.

On peut ainsi combiner les caractéristiques de différents matériaux.

Malheureusement, les pellicules qui existent actuellement ne donnent
pas entièrement  satisfaction et constituent, en réalité, un compromis entre des défauts et des qualités, les défauts étant encore nettement marqués.

Ainsi, par exemple, on sait depuis longtemps que la thermo-rétractibilité de l'enveloppe est indispensable pour s'appliquer intimement au
produit et constituer, de ce fait, une sorte de peau car, sinon, il se produirait des plis nombreux et importants qui représentent de graves inconvénients:

- les exudats et jus, de produits carnés notamment, viennent s'y loger, puis sous l'effet de la lumière ambiante, une certaine prolifération microbienne peut s'enclencher au détriment de l'effet de conservation recherché;

- la plus ou moins grande dureté de ces plis peut blesser et perforer les paquets contigus groupés ensemble dans une même unité de conditionnement;

- l'aspect et la présentation en rayons et étalages laissent à désirer.

Or, pour obtenir la thermo-rétractibilité bi-directionnelle, il faut étirer la pellicule dans les deux directions du plan. Beaucoup de matériaux thermo-plastiques se prêtent à cet étirage bi-axial sans transformation chimique préalable, mais aucun de ces matériaux ne donne entièrement satisfaction, en particulier pour les raisons suivantes:

- des matériaux thermo-plastiques ont une thermo-rétractibilité, (conséquence de l'étirage bi-axial) qui ne peut être mise en oeuvre en quelques secondes aux températures relativement basses qu'exige la fragilité thermique de nombreux produits alimentaires; on peut citer par exemple, le polypropylène, le polyéthylène haute densité, les polyamides, etc.

- des matériaux ont des propriétés thermiques qui conviennent mais qui n'offrent pas, après l'étirage bi-axial, les propriétés mécaniques suffisantes; on peut citer par exemple, le polyéthylène basse densité, certains copolymères polyoléfiniques.

Pour donner à cette dernière catégorie de matériaux les propriétés mécaniques exigées par les conditions d'utilisation sévères de la plupart des applications, on a constaté depuis longtemps qu'il fallait faire intervenir la transformation chimique, appelée réticulation, par laquelle les chaînes macromoléculaires sont reliées entre elles transversalement; cette réticulation peut être obtenue soit par irradiation, soit par des moyens chimiques.

Cependant, les réglements en vigueur interdisent de mettre en contact les produits alimentaires avec des matières qui ont été soumises aux rayonnements ionisants inhérents à l'irradiation; d'autre part, certains additifs incorporés dans les matériaux thermo-plastiques subissant la réticulation par voie chimique ne sont pas légalement autorisés du point de vue alimentaire. Ces dispositions réglementaires ont pour conséquence pratique que la pellicule réticulée devrait ne pas se trouver du côté qui doit être au contact des produits alimentaires. Toutefois, pour des raisons techniques liées à la facilité de la mise en oeuvre de l'opération d'étirage bi-axial, on réalise la pellicule multicouches sous forme d'une gaine et l'on commence par l'extrusion de la couche qui doit se trouver à l'intérieur de la gaine puisque l'on ne peut extruder la ou les couches supplémentaires qu'à l'extérieur et non à l'intérieur de celle qui est préalablement constituée. Par ailleurs, on ne peut irradier préalablement qu'une seule des couches formant la pellicule complète car si cette irradiation a pour avantage de créer la réticulation favorable à l'étirage, elle a par contre, comme inconvénient de détériorer les matériaux thermo-plastiques présentant un carbone quaternaire (tétra-substitué) ce qui est le cas du polychlorure de vinylidène qui peut être utilisé comme matériau thermo-plastique constituant l'une des couches. Dans le cas d'utilisation, pour cette couche, de matériaux étanches ne présentant pas de carbone quaternaire, tels que les polyalcools par exemple, l'irradiation préalable de l'une des autres couches s'impose néanmoins, car l'irradiation de l'ensemble de la structure tendrait à diminuer sa flexibilité rendant ainsi, après rétraction, les plis, coins et bandes de soudures extérieures durs et blessants. Quant à l'utilisation de la voie chimique aux fins de réticulation, il est nécessaire que la couche réticulée soit isolée pour qu'elle puisse subir cette réticulation dans des conditions acceptables. Ainsi, les conditions techniques actuellement connues conduisent à la création d'une gaine tubulaire dont la couche intérieure est précisément celle qui doit être réticulée.

Une pellicule de ce type est, par exemple, décrite dans le brevet français 2.132 212 qui montre, en outre, qu'un autre inconvénient de ces pellicules multi-couches provient du fait que les matières utilisables sont des mélanges de polymères thermo-plastiques qui présentent un spectre étroit de poids moléculaire, ce qui sous-entend un prix de revient plus coûteux tant au niveau de la sélection des matières qu'au niveau du procédé de polymérisation lui-même.

En outre, le taux de réticulation de ces matières synthétiques doit être relativement important (supérieur à 50%) ce qui a pour conséquence d'augmenter leur résistance à la chaleur et ainsi de les rendre impropres à se rétracter lorsqu'on les soumet aux équipements existants fonctionnant à l'air chaud. Par conséquent, cela implique d'utiliser obligatoirement de l'eau chaude qui suppose des installations plus complexes et plus coûteuses nécessitant, entre autres, l'évacuation des vapeurs d'eau hors de la zone de conditionnement et le séchage de l'enveloppe fermée avant sa mise en carton.

Un autre inconvénient des pellicules connues irradiées vient du fait que la couche interne de la gaine doit se souder à elle-même lorsqu'après aplatissement la gaine est fermée par thermo-soudure. Or, la couche intérieure de la gaine est précisément celle qui a subi la réticulation dont une des caractéristiques est de rendre la matière ainsi traitée plus résistante à la chaleur et donc à la soudure; le fonctionnement des barres de thermo-soudure des machines de conditionnement devient donc délicat dans la mesure où la température et la durée de soudure doivent être ajustées de manière très fine, ce qui peut être incompatible avec une bonne soudure surtout lorsqu'il se présente des souillures à l'endroit de la soudure du fait de l'introduction du produit à emballer.

Le taux relativement élevé de la réticulation a également pour conséquence de supprimer pratiquement la faculté de la couche interne de la gaine à l'auto-thermoscella- ge; il s'agit de la faculté d'un matériau à se souder à lui-même au-dessous du point de fusion mais pendant un temps relativement long de quelques secondes, tandis que la thermo-soudure est une opération qui consiste à soumettre un matériau à une température nettement supérieure à son point de fusion mais pendant un temps très court, de l'ordre de deux ou trois dixièmes de seconde.

Dès lors que la réticulation augmente la résistance à la chaleur, il est clair en effet que les possibilités de thermo-soudure sont réduites et à plus forte raison la faculté à l'auto-thermoscellage.

. Une autre conséquence du taux relativement élevé d'irradiation est la diminution correspondante de flexibilité et de plasticité, ce qui peut interdire l'emballage de produits durs tels que, par exemple, la poitrine de porc fumée ou le bacon.

Un autre inconvénient des produits et des procédés connus résulte du fait que la pellicule multi-couches est toujours utilisée sous forme de gaine de diamètre déterminé ce qui entraîne que l'on doit disposer d'une gamme de plusieurs diamètres lorsque l'on doit conditionner des produits de dimentions différentes.

On a déjà pensé à extruder les couches du type décrit ci-dessus sous forme non plus d'une gaine tubulaire mais sous forme d'une nappe continue. On s'est alors heurté à l'impossibilité pratique de les étirer dans les deux directions du plan, à plat, pour leur communiquer la thermo-rétractibilité requise.

La présente invention remédie à l'ensemble des inconvénients énumérés ci-dessus en permettant d'isoler efficacement les produits à emballer de la couche réticulée ainsi qu'en permettant d'obtenir une pellicule multi-couches se prêtant, soit sous forme de nappe simple, aux machines de conditionnement connues sous le nom de: "Form-Fill-Seal", soit sous forme de nappe double à la transformation en sacs.

L'invention sera bien comprise par la description détaillée ci-après faite en référence au dessin annexe.

Bien entendu, la description et le dessin ne sont donnés qu'à titre d'exemple indicatif et non-limitatif.

La figure I est un schéma montrant les principales étapes d'un procédé de fabrication conforme à l'invention.

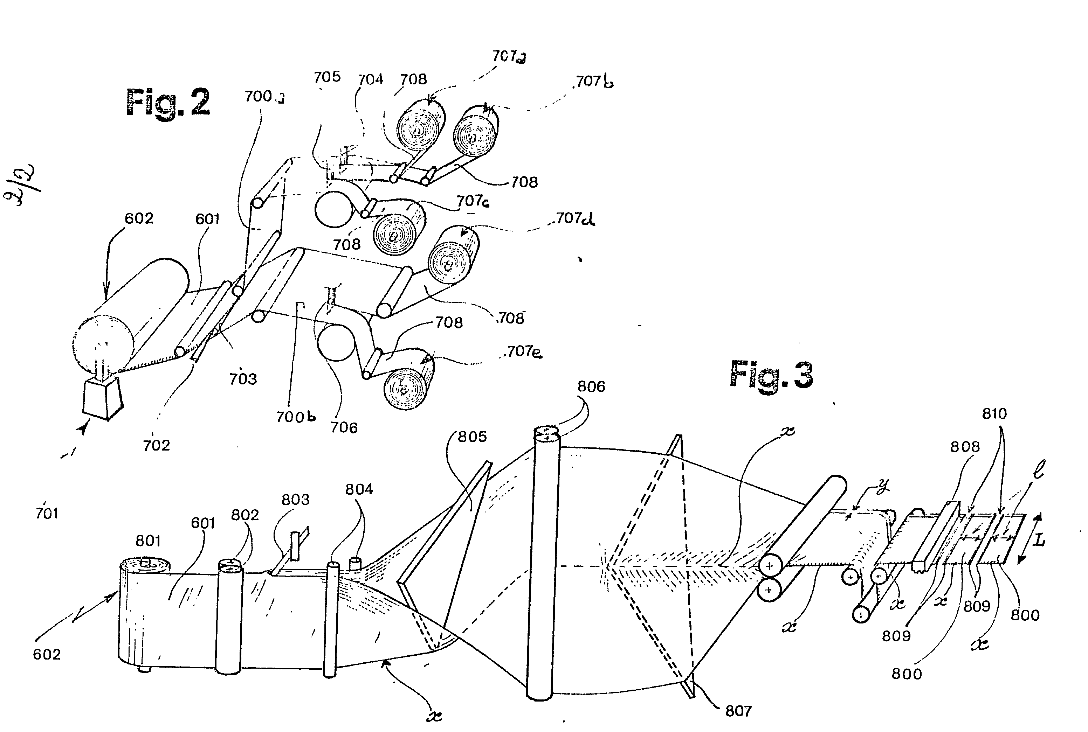

Les figures 2 et 3 montrent deux variantes du procédé aboutissant à la transformation de la gaine semi-finie, soit en bobineaux de nappe simple découpée à la largeur voulue pour utilisation sur les machines de conditionnement du type cité plus haut, soit en nappe double pour l'obtention de sacs.

L'invention concerne une pellicule formée d'au moins deux couches associées intimement et de caractéristiques différentes, destinée à constituer une enveloppe thermo-rétractable pour l'emballage de produits notamment alimentaires, du type comprenant au moins une couche dite "substrat" réticulée soit par irradiation, soit par des moyens chimiques et une couche dite "de contact" apte à résister à des efforts mécaniques tels que chocs, frottements et perforations, caractérisée en ce que cette pellicule est conditionnée et présentée de telle manière que la couche de contact non réticulée soit interposée entre le produit à emballer et le substrat qui, ainsi, constitue la face externe de l'emballage

Selon un mode de réalisation particulier, la pellicule conforme à l'invention est du type à deux couches. Elle est imperméable à l'introduction microbienne mais est relativement perméable à l'oxygène et s'utilise lorsqu'il s'agit d'emballer des produits alimentaires des catégories suivantes: volailles fraîches, viandes fraîches découpées et présentées en étal pour 24 à 48 heures maximum, produits surgelés. Elle peut également être utilisée pour emballer ou suremballer des produits non-alimentaires tels que livres, boîtes de toute sorte, pochettes de disques etc.

Cette pellicule comprend seulement un "substrat" réticulé soit par irradiation soit par voie chimique, et une couche de contact.

Le matériau servant à obtenir la couche de contact a des caractéristiques qui font que, par sa mise en oeuvre dans le procédé de fabrication, la couche de contact est à la fois alimentaire, facilement thermo-soudable et se prête bien à l'auto-thermoscellage dans les conditions d'utilisation. La face externe, du fait de la réticulation de la couche correspondante, présente une certaine dureté de surface qui protège efficacement le produit emballé contre l'abrasion et la perforation dues à des agents extérieurs qui peuvent intervenir lors des manipulations, conditionnements, transports, etc.

Selon un autre mode de réalisation, la pellicule conforme à l'invention comprend au moins trois couches dont au moins une, ajoutée au substrat et à la couche de contact,est une couche d'imperméabilisation dite "barrière" non réticulée qui est interposée entre la couche de contact et ce substrat.

Cette pellicule du type à trois couches, est imperméable à l'introduction microbienne et aussi hautement imperméable à l'oxygène atmosphérique en en interdisant l'introduction, aux fins de bonne conservation ainsi qu'à la vapeur d'eau en en interdisant l'évacuation, aux fins de la conservation en teneur d'eau, lorsqu'il s'agit d'emballer des produits alimentaires présentant un haut degré d'exigence de conservation de longue durée et d'hygiène tels que les produits carnés frais (viande en muscle par exemple) ou élaborés (salaisonneries par exemple). Ce type de pellicule comprend un substrat réticulé, soit par irradiation, soit par voie chimique, une couche qui forme barrière contre la diffusion de l'oxygène et de la vapeur d'eau et une couche de contact. Outre les avantages indiqués ci-dessus, cette pellicule présente évidemment un haut degré d'imperméabilité aux gaz, en particulier, à l'oxygène et à la vapeur d'eau.

La pellicule à trois couches décrite ci-dessus possède un effet barrière non seulement à l'égard de l'oxygène et de la vapeur d'eau mais aussi à l'égard du gaz carbonique ce qui, pour les produits alimentaires considérés ci-dessus, n'a pas d'effet mais constitue un inconvénient pour certains produits alimentaires tels que quelques types de fromage (Emmenthals, Edams par exemple) qui dégagent des quantités plus ou moins importantes de gaz carbonique. Selon une caractéristique de l'invention, une pellicule à trois couches décrite ci-dessus possède un effet barrière différencié qui, tout en évitant la diffusion de l'oxygène et de la vapeur d'eau, permet au gaz carbonique engendré par le produit, de s'échapper ce qui empêche le ballonnement de l'enveloppe.

A cet effet, la couche barrière est réalisée à partir d'un copolymère de chlorure de vinylidène additionnée d'un plastifiant polymérique dans la proportion d'environ 7 à 12% et d'un stabilisant dans la proportion d'environ 4%.

Selon une caractéristique de l'invention, la couche barrière étant de nature à présenter une certaine incompatibilité avec l'une, au moins, des deux autres couches, la pellicule comprend une couche de compatibilisation interposée entre la couche barrière et la ou les autres couches.

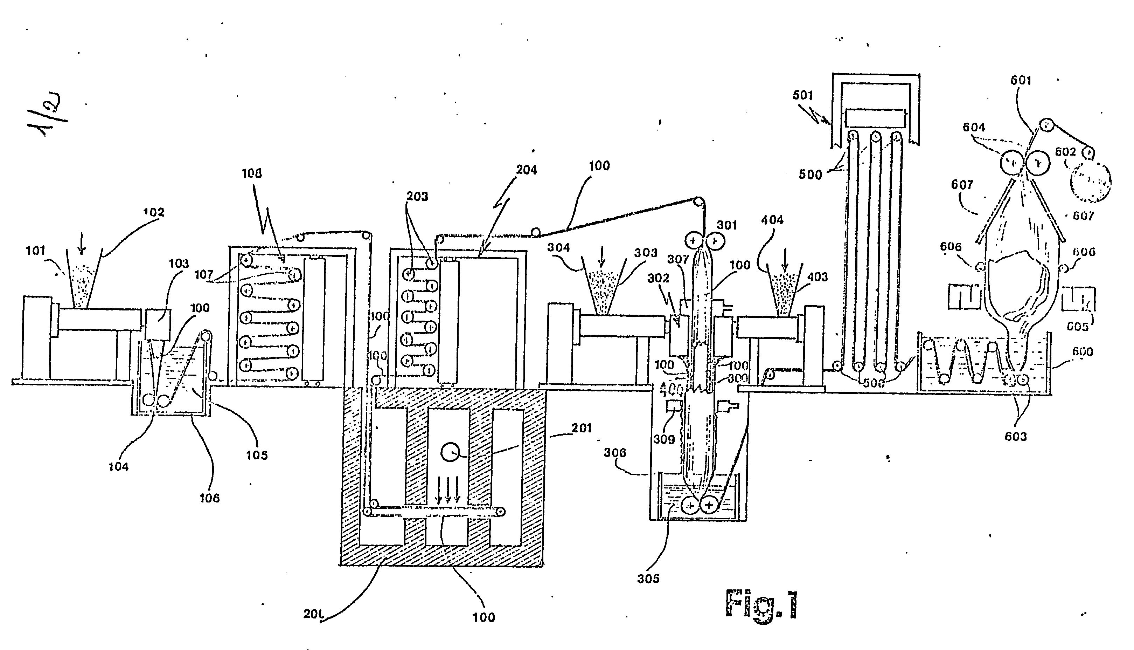

En se reportant à la figure 1, on voit que le procédé de fabrication d'une pellicule conforme à l'invention comprend lui-même plusieurs étapes, se succédant les unes aux autres en défilement continu, dont on va décrire ci-après les principales caractéristiques sachant que les détails, compléments et accessoires sont bien connus de l'homme de métier.

Ce procédé est caractérisé en ce que l'on extrude d'abord le substrat sous forme d'une gaine tubulaire, puis que l'on soumet cette gaine à une opération de réticulation soit par irradiation soit par des moyens chimiques, puis que l'on extrude à l'extérieur de la gaine tubulaire de substrat une deuxième gaine de couche de contact ainsi qu'éventuellement une troisième couche de protection soit en même temps que la couche barrière soit après, puis qu'après obtention d'une telle gaine à au moins deux couches grâce à des opérations associées de tout type connu, on étire ladite gaine dans les deux di-

9

rections du plan, notamment par dilatation, puis, qu'après
stockage sous forme de bobines et transport éventuel,
on fend ladite gaine selon au moins une des deux génératrices opposées afin de la disposer à plat, puis l'on utilise
la gaine ainsi fendue en nappe, soit simple, soit double
après inversion des faces de la nappe, de telle sorte
que le substrat jusqu'alors à l'intérieur de la gaine
soit dorénavant destiné à être à l'extérieur de l'enveloppe obtenue à partir de la nappe et qu'à la fois la
couche de contact jusqu'alors à l'extérieur de la gaine
soit dorénavant destinée à être à l'extérieur de l'enveloppe obtenue à partir de la nappe, c'est-à-dire au contact
des produits à envelopper.

La première étape consiste à obtenir une gaine tubulaire 100 à partir d'une matière première 101 arrivant dans
une trémie 102 et desservant une extrudeuse de tout type
connu équipée d'une tête-filière unique 103.

La matière première est une résine thermo-plastique
appropriée qui doit constituer un extrudat homogène, amorphe et de propriétés visco-élastiques convenables pour
former un tube suffisamment résistant mécaniquement pour
être tiré par un ensemble de cylindres pinceurs-tireurs
104 qui donne à la matière constitutive de la gaine 100
une orientation longitudinale.

La gaine 100 est donc aplatie par les cylindres 104
et l'on sait que certaines précautions doivent être prises
pour éviter le collage de la matière à elle-même lors
de cet aplatissement. La gaine 100, en cours d'orientation longitudinale et d'aplatissement, parcourt, du haut
vers le bas, aux fins de trempe, un bain de refroidissement 105 contenu dans un bac 106; il est recommandé d'utiliser de l'eau potable adoucie réfrigérée à 6°C.

Cette trempe a pour effet de figer l'orientation
longitudinale imposée à la gaine 100 par les rouleaux
104 et, par suite, de déterminer le diamètre définitif
de la gaine et la largeur du ruban aplati; la possibilité
de régler le niveau d'eau du bain de trempe dans certaines
limites permet, tout en n'utilisant qu'une seule tête-filière tubulaire, d'obtenir une gamme de largeurs du ruban qui correspond, en fin de compte, à une gamme de largeurs possibles de la gaine obtenue dans un rapport d'environ 1,7/I.

La gaine 100 sous forme de ruban aplati, sort du bac 106 et est engagée sur deux séries de rouleaux 107 qui constituent ensemble un moyen de stockage en marche appelé accumulateur 108 qui permet, selon l'écartement plus ou moins important des rouleaux supérieurs 107 par rapport aux rouleaux inférieurs, de stocker par exemple une cinquantaine de mètre de ruban aplati, ce qui permet, en cas d'incidents en amont et, notamment au niveau de la tête d'extrusion 103, la poursuite du procédé de fabrication en aval.

La deuxième étape consiste à provoquer la réticulation du ruban aplati à sa sortie de l'accumulateur 108. On a représenté sur le schéma le mode de réalisation de l'invention selon lequel cette réticulation est obtenue par irradiation, mais, comme indiqué plus haut, cette réticulation peut être obtenue non pas par irradiation mais par des moyens chimiques.

A la sortie de l'accumulateur 108 le ruban aplati 100 est guidé jusqu'à l'intérieur d'une enceinte de protection 200 contenant une source 201 émettant un rayonnement $\beta^-$ approprié. L'énergie (tension d'accélération), la fluence (intensité) et la trace (balayages transversal et longitudinal) des particules $\beta^-$ doivent être tels que la dose moyenne reçue par le ruban 100 d'épaisseur déterminée, défilant à une vitesse linéaire déterminée dans la trace, crée un taux de réticulation moyen dans toute la masse du ruban 100 de préférence dans la plage de 25% à 40%. A la sortie de l'enceinte 200, le ruban aplati 100 passe sur deux séries de rouleaux 203 constituant un accumulateur 204 jouant un rôle analogue à celui de l'accumulateur 108 et de capacité équivalente.

Le ruban aplati 100 constitue à présent le substrat réticulé. Il est loisible de lui superposer une ou plusieurs autres couches par coextrusion ou par extrusions séquentielles, en fonction des caractéristiques voulues
pour la pellicule finie; en tout état de cause, le ruban
substrat réticulé 100 demeure le support indispensable
de l'étirage bi-axial que doit subir la pellicule quel
que soit le mode de réalisation retenu, étirage bi-axial
qui détermine la thermo-rétractibilité qu'elle doit présenter.

La troisième étape consiste, précisément, à effectuer
l'enrobage de la gaine substrat réticulée 100 par une
ou plusieurs couches constituées de matériaux thermo-plastiques appropriées en fonction des pellicules à deux,
trois ou cinq couches décrites plus haut.

Pour cette opération, le ruban substrat réticulé
aplati 100 est engagé entre deux cylindres pinceurs 301
qui assurent la traction et le serrent suffisamment pour
constituer un joint dynamique étanche en amont d'une tête-
filière tubulaire d'extrusion 302.

S'il s'agit de fabriquer une pellicule à deux couches, il suffit d'une simple tête-filière 302 de diamètre
convenable montée sur une extrudeuse adéquate alimentée
par la matière première correspondante pour créer une
gaine 300.

S'il s'agit de fabriquer une pellicule à trois couches,
on peut procéder, soit au moyen d'une tête filière tubulaire de coextrusion à deux voies et de deux extrudeuses alimentées chacune par la matière première appropriée,
soit au moyen de deux extrusions séquentielles l'une suivant immédiatement l'autre, pour créer une gaine 300 et
une gaine 400, à partir de matières premières 303 et 403
arrivant dans des trémies 304 et 404.

S'il s'agit de fabriquer une gaine à cinq couches
dont deux couches de compatibilisation, on peut procéder
soit au moyen d'une tête-filière tubulaire de coextrusion à quatre voies et de quatre extrudeuses adéquates
alimentées chacune par la matière première appropriée,
soit au moyen de quatre extrusions séquentielles se suivant l'une l'autre.

Dans tous les cas, la gaine substrat réticulée 100,

après avoir traversé la tête-filière d'extrusion 302 par un alésage prévu à cet effet, est engagée entre deux cylindres pinceurs 305 placés dans le même plan vertical que les cylindres 301 et situés dans un bac 306 de telle sorte qu'entre ces deux ensembles de cylindres la gaine 100 puisse être gonflée avec de l'air pour se présenter non plus sous la forme d'un ruban aplati mais réellement sous forme d'une gaine tubulaire, ce qui est indispensable à l'enrobage annulaire convenable de la gaine 100 par la couche 300 ou les couches 300 et 400 et éventuellement, les couches de compatibilisation.

Afin que des poches d'air ne subsistent pas sur la face externe de la gaine 100, ce qui gênerait l'adhérence convenable de la ou des couches 300-400, on prévoit un dispositif 307 relié à une centrale effectuant une dépression en amont de la tête-filière 302 autour de la gaine 100, ce qui a pour effet le placage, sans capture d'air, de la ou des couches coextrudées 300-400 sur la gaine 100. Dans le cas d'extrusions séquentielles, il faut autant de dispositifs 307 qu'il y a d'extrusions.

La ou les autres couches d'enrobage 300-400 doivent être aussi orientées longitudinalement et trempées ainsi qu'il a été fait pour la gaine 100. A cet effet, on prévoit ici un anneau 309 alimenté en eau réfrigérée de telle façon que le niveau de cette eau soit sensiblement constant et que l'eau puisse déborder et ruisseler le long de la gaine 400 pour être récupérée par le bac 306 avant d'être refoulée à la centrale de réfrigération.

A la fin de la dernière extrusion, qu'il s'agisse d'une gaine à deux, trois ou cinq couches, à la sortie des cylindres pinceurs 305, le ruban aplati multi-couches ainsi formé est engagé sur deux séries de rouleaux 500 qui constituent un accumulateur 501 dont le principe a déjà été décrit en regard des accumulateurs 108 et 204; cet accumulateur doit permettre la poursuite sans à-coup du fonctionnement en amont en cas d'incident en aval, c'est-à-dire au cours de l'opération d'étirage bi-axial; le risque d'incident y étant plus important, l'accumulateur 501 doit avoir une capacité substantiellement supérieure à celle des précédents.

A la sortie de l'accumulateur 501, le ruban aplati est conduit par des rouleaux à l'intérieur d'un bac 600 contenant de l'eau chaude en circulation permanente, ce bac contenant des cylindres 603 qui pincent entre eux le ruban aplati de manière étanche, de même que les cylindres aplatisseurs 604 situés à une certaine hauteur (fonction de la largeur finale de la gaine aplatie) et dans le même plan vertical que les cylindres 603 de telle sorte que le ruban aplati, engagé d'abord entre les cylindres 603 puis dans les cylindres 604, constitue, entre les deux, une capacité étanche dans laquelle de l'air comprimé, préalablement insufflé, reste captif et assure le gonflement en continu du ruban multi-couches afin de communiquer à toutes les couches simultanément l'étirage transversal et longitudinal (étirage bi-axial) requis.

Le gonflement est permis par le ramollissement de la matière qui constitue chacune des couches sous l'effet de la chaleur communiquée par l'eau chaude contenue dans le bac 600. En effet, ce réchauffement a pour but, d'une part, de relâcher les liaisons physico-chimiques de la couche intérieure (substrat) réticulée 100 afin qu'elle se prête aux forces d'étirage bi-axiales dues à la pression de l'air comprimé captif de gonflage entre les cylindres 603 et 604 et, d'autre part, de ramollir suffisamment la couche 300 ou les couches 300 et 400 afin qu'elle ou elles suivent, sans désadhérence, l'étirage bi-axial imposé par la couche interne (substrat) réticulée 100. L'étirage bi-axial de la gaine multicouches est figé au moyen d'air froid insufflé par un dispositif annulaire à diaphragme 605 placé au-dessus du bac 600 et au-dessous de rouleaux centreurs 606, eux-mêmes situés au-dessous de guides 607 favorisant l'aplatissement de la gaine par les cylindres 604.

Le taux d'étirage transversal est défini comme étant le rapport entre la largeur du ruban multi-couches aplati avant gonflage et la largeur de la gaine étirée bi-

axialement, aplatie. Ce taux peut être, à capacité d'air captif égal, ajusté en faisant varier la hauteur entre les cylindres pinceurs 603 et les cylindres aplatisseurs 604. Le taux d'étirage longitudinal est défini comme étant le rapport entre la vitesse périphérique des cylindres 604 et celle des cylindres 603; ce taux peut être ajusté en faisant varier l'une de ces vitesses par rapport à l'autre.

A la sortie des cylindres aplatisseurs 604, la gaine bi-étirée multi-couches 601 est enroulée en bobines 602 constituant ainsi un produit semi-fini qui peut être stocké.

A ce stade du procédé conforme à l'invention, deux variantes sont possibles suivant l'utilisation ultérieure que l'on envisage pour la gaine 601.

Selon la première variante, la gaine est fendue selon deux génératrices opposées, notamment le long des plis formés pour sa mise sur bobine, puis chacune des deux nappes simples ainsi formées est mise sur bobine éventuellement après découpage longitudinal en au moins deux lés.

Cette première variante (voir fig. 2) a pour but de présenter, en tant que produit fini, des bobineaux de nappe thermo-rétractable multi-couches, utilisables sur des machines de conditionnement et d'emballage basées sur le principe "Form-Fill-Seal". A cette fin, les bobineaux de produit semi-fini 601 sont transformés par une station de découpage qui comporte un poste de déroulement 701, des lames latérales 702 fendant la gaine 601 suivant ses deux plis et un dispositif de séparation 703 pour obtenir deux nappes simples 700a et 700b. Des dispositifs de coupe longitudinale réglables 704, 705 et 706 permettent la découpe longitudinale des nappes 700a et 700b dans des largeurs voulues et correspondent à des stations d'enroulement 707a, 707b et 707c pour la nappe 700a ainsi que 707d et 707e pour la nappe 700b.

La gaine thermo-rétractable multi-couches constituant un produit fini 708, conforme à l'invention se présente alors sous forme de bobineaux sur lesquels on a repéré la face réticulée (substrat par rapport à la face non réticulée (face de contact).

Les bobineaux de pellicule thermo-rétractable multi-couches 708 peuvent ainsi, en tant que produit fini, alimenter des machines de conditionnement et d'emballage du type "Form-Fill-Seal". On peut prévoir, par exemple, qu'au poste de déroulement de ces machines la pellicule 708 est déroulée puis pliée par un conformateur de tout type connu afin que la face non-réticulée (face de contact) soit à l'intérieur. De même, les séquences "Form" (formage et pliage), "Fill" (remplissage, introduction du produit à emballer), "Seal" (réalisation de la soudure dorsale et d'une soudure transversale) peuvent être suivies par une séquence de mise sous vide accompagnée de la fermeture par une autre soudure transversale, puis par une séquence de rétraction (de préférence au moyen d'une enceinte à air chaud).

La deuxième variante consiste à transformer la gaine thermo-rétractable multi-couches semi-finie 601 en sacs de dimensions diverses.

Selon cette seconde variante, la gaine est fendue selon une seule génératrice, notamment le long de l'un des plis formés pour sa mise sur bobine, puis est mise à plat, puis est repliée longitudinalement sur elle-même pour obtenir une nappe double dont la face intérieure est la couche de contact qui était à l'extérieur de la gaine et dont la face extérieure est le substrat qui était à l'intérieur de la gaine, cette nappe double étant soudée et fractionnée transversalement pour constituer des enveloppes fermées sur trois côtés et ouverte sur le côté correspondant aux lèvres créées lorsque l'on a fendu la gaine.

En se reportant à la figure 3, on voit que les bobi-neaux de gaine semi-finies 601 alimentent des machines de transformation pour l'obtention de sacs. A partir d'un poste de déroulement 801, la gaine semi-finie 601 est tirée par les cylindres-pinceurs 802. Une lame 803 fend la gaine 601 suivant l'un de ses plis et les deux faces de la gaine 601 sont guidées et maintenues l'une par rapport à l'autre par des rouleaux 804 puis sont mises à plat dans le même plan au moyen d'un triangle-déplieur 805 calé sur le pli subsistant $x$. Des cylindres 806 tirent la nappe de double largeur ainsi formée, puis un triangle-replieur 807, décalé de quelques millimètres par rapport à la marque du pli subsistant $x$, permet de replier la nappe double largeur sur elle-même, mais, à l'envers, c'est-à-dire que la face non-irradiée (face de contact) se trouve à présent à l'intérieur et la face irradiée (substrat) à l'extérieur.

Selon une caractéristique de l'invention, la nappe double est obtenue par pliage longitudinal asymétrique pour que les deux lèvres créées lorsque l'on a fendu la gaine soient décalées transversalement par rapport à l'axe longitudinal de la nappe.

Grâce au décalage dans le repliement des deux faces, celles-ci ne se trouvent plus avec leurs bords superposés, mais ceux-ci présentent un décalage $y$ de quelques millimètres, ce qui facilite, par la suite, l'ouverture du sac au moment de son chargement avec le produit à emballer.

La nappe double ainsi repliée alimente une machine à sacs proprement dite dont la course est réglée pour obtenir la largeur des sacs et non leur longueur. A la fin de cette course, le temps d'arrêt de la machine qui s'ensuit permet, à une tête de soudure à deux électrodes rapprochées et à un ensemble de coupe incorporé, de tout type connu 808 de réaliser simultanément deux soudures transversales rapprochées 809 et une coupe transversale 810 centrée entre les deux soudures 801.

Avec cette façon d'opérer, on obtient des sacs rectangulaires 800 à soudures latérales, dont le fond est le pli $x$ reconstitué lors du repliement de la nappe double largeur, dont la largeur $1$ est donnée par la course de la machine, dont la longueur $L$ est déterminée par la largeur de la gaine bi-orientée multi-couches 601 et dont les parois internes sont constituées par la couche de contact non-irradiée et les parois externes par la couche irradiée.

On peut noter ici que les sacs ainsi constitués bénéficient des avantages exposés plus haut quant aux possibilités spécifiques de chacune de leurs couches. Par ailleurs, il est évident que dans la mesure où la gaine bi-orientée initiale 601 dispose d'une couche barrière, les sacs 800 qui en résultent ont des propriétés d'étanchéité comme il a été indiqué plus haut.

Les sacs thermo-rétractables multi-couches ainsi fabriqués peuvent être utilisés sur des chaînes de conditionnement et d'emballage prévues pour une telle utilisation, à savoir: chargement, le plus souvent manuel, du produit à emballer, mise sous vide et fermeture par agrafage mécanique ou par thermo-soudure qui se pratiquent le plus souvent dans des machines prévues à cet effet, dites aussi machines à "cloche", enfin, rétraction du paquet conditionné dans une enceinte adéquate (à eau chaude ou à air chaud) dans des conditions de température et de temps de résidence déterminées.

On voit que grâce à l'invention, il est possible de conditionner des produits, notamment alimentaires, au moyen d'une pellicule multi-couches dont l'une est réticulée par exemple par irradiation en plaçant cette couche à l'extérieur du produit à emballer afin qu'une couche au moins soit placée entre le produit à emballer lui-même et la couche extérieure irradiée.

En d'autres termes, un emballage obtenu conformément à l'invention est composé d'une pellicule thermo-rétractable dont le substrat est situé à l'extérieur et dont la couche barrière éventuelle est située entre le substrat et une couche de contact non réticulée qui, elle, est toujours placée contre le produit.

Pour qu'une pellicule obtenue avec le procédé ci-dessus puisse donner toute satisfaction, cette pellicule est caractérisée en ce que ce substrat est réalisé à partir d'un copolymère obtenu par polyaddition irrégulière d'un monomère bi-fonctionnel symétrique du type éthène et d'un monomère bi-fonctionnel asymétrique du type éthanoate

18

de vinyle, avantageusement à raison de 5 à 12% en poids dudit monomère, ce copolymère extrudé pour réaliser une pellicule,présentant un taux de réticulation inférieur à 50% et de préférence compris entre 25 et 40%.

On note qu'un tel substrat peut être obtenu à partir de matières premières connues pour leurs qualités et ne nécessite aucune sélection particulière. Notamment leur poids moléculaire peut s'étaler sur un spectre très large, c'est-à-dire que la polydispersité des copolymères en cause n'entre pas en ligne de compte.

Le taux de réticulation faible c'est-à-dire inférieur à 50% et de préférence compris entre 25 et 40% est obtenu, dans l'exemple représenté, à partir d'une source de rayonnement $\beta^-$ 201 de 500 KeV et procure des avantages spécifiques.

En effet, la structure tri-dimensionnelle (liaisons entre plans cristallins lamellaires), obtenue grâce à la réticulation par irradiation, donne une bonne tenue mécanique au substrat lors de son bi-étirage et assure une dureté de surface qui protège contre l'abrasion, notamment. Le taux de réticulation relativement faible préconisé, par contre, assure en grande partie, le maintien des caractéristiques de flexibilité propres aux copolymères utilisés, flexibilité qui reste un atout appréciable lors des différentes utilisations.

Par ailleurs, ce taux relativement faible permet l'obtention de taux de rétraction d'autant plus élevés, à orientation égale, ce qui est une assurance de supprimer la formation de plis, cornes etc. et une possibilité d'utiliser, pour la rétraction, des milieux à coefficient d'échange calorifique moins performants que celui de l'eau, tels que l'air, mais dont la mise en oeuvre est beaucoup plus simple et moins coûteuse.

Il est donc important que le substrat situé à l'extérieur de l'emballage soit obtenu et traité comme on vient de le dire.

Selon l'invention, le substrat qui constitue la face externe de l'emballage doit être séparé de la surface externe du produit emballé.

Ainsi, selon une caractéristique de l'invention, la couche de contact est obtenue à partir d'un ionomère c'est-à-dire d'un dérivé de copolymères d'éthylène et d'acide méthacrylique auquel est greffé latéralement un composé contenant un cation métallique tel que sodium, zinc et analogues, cet ionomère étant éventuellement associé à des additifs tels que glissants, anti-statiques, colorants et autres.

De ces caractéristiques, découlent des avantages spécifiques tels qu'une grande résistance chimique, des qualités visco-élastiques importantes et une grande facilité de mise en oeuvre.

On sait par ailleurs que la présence des cations entraîne une réticulation ionique et non par liaison de valence C, grâce à laquelle la pellicule ainsi constituée présente une grande résistance aux basses températures, aux chocs et impacts, une excellente résistance à l'abrasion et se prête particulièrement bien à l'extrusion.

Il s'agit d'un matériau parfaitement "alimentaire" présentant une grande résistance aux graisses et une excellente compatibilité d'adhérence avec les autres matières premières utilisées pour le substrat par exemple.

De la sorte, une pellicule conforme à l'invention respecte rigoureusement les exigences réglementaires et, notamment, l'article 2 du décret 70-392 du 8 mai 1970 qui interdit, en France, de mettre en contact avec des denrées alimentaires des matériaux ayant été soumis à une irradiation ionisante.

On vient de montrer que la couche 100 qui constitue le substrat présente des qualités telles qu'il peut sans inconvénient se trouver à l'extérieur puisqu'il est spécialement adapté à ces conditions d'emploi: chocs, frottements et autres contraintes dus au stockage et aux manipulations.

On vient de montrer également que la couche non-réticulée 400 (couche de contact) doit se trouver à l'intérieur de l'emballage c'est-à-dire au contact direct avec le produit à emballer et présente toutes les qualités d'alimentarité voulues.

Quant à l'éventuelle couche intermédiaire 300, il s'agit d'une "couche barrière", destinée à donner un haut degré d'imperméabilité aux gaz (notamment à l'oxygène et à la vapeur d'eau).

Cette couche 300 est obtenue à partir de matières premières du commerce telles qu'un copolymère de chlorure de vinylidène à charge PVC ou un polyalcool.

On note qu'une pellicule conforme à l'invention peut ne comporter que deux couches c'est-à-dire, dans l'exemple représenté, la couche extérieure 100 (substrat) devant être réticulée et la couche de contact 400 devant ne pas l'être.

Une pellicule à trois couches conforme à l'invention et obtenue selon le procédé ci-dessus, peut, par exemple, présenter les caractéristiques ci-après:

1. couche 400 devant se trouver au contact du produit à emballer réalisée par extrusion d'un composé contenant un cation sodium et additionné d'agents glissants tel que celui connu dans le commerce sous le nom de: "SURLYN 1603" de la Société Dupont de Nemours.

2. couche barrière 300 devant se situer à l'extérieur de la précédente: obtenue par extrusion d'un copolymère de chlorure de vinylidène tel que celui connu dans le commerce sous le nom de "IXAN WV 320" de la Société SOLVAY auquel on ajoute un plastifiant à raison d'environ 2% tel que celui connu dans le commerce sous le nom de: "SANTICIZER 141" de la Société MONSANTO ainsi qu'un stabilisant à raison d'environ 4% tel que celui connu dans le commerce sous le nom de "DER 334" de la Société DOW CHEMICAL.

3. couche extérieure 100 (substrat) obtenue par extrusion d'un copolymère d'éthylène et d'acétate de vinyl ayant une teneur en acétate de vinyl d'environ 9% tel que celui connu dans le commerce sous le nom de: "BAYLON V 10 H 460 (ou 564)" de la Société BAYER.

La couche de contact 40C a une épaisseur nominale de 16,5 microns, la couche barrière intermédiaire a une épaisseur de 7,7 microns et le substrat extérieur a une épaisseur de 38,8 microns.

Une telle gaine a donc une épaisseur totale d'environ 63 microns et présente les caractéristiques ci-après:

- module d'élasticité à 23°C, longitudinale et transversale: 200 daN/cm$^2$ maximum,

- résistance longitudinale à la rupture: 520 daN/cm$^2$ minimum,

- résistance à la rupture transversale: 450 daN/cm$^2$ minimum,

- allongement longitudinal à la rupture: 180%,

- allongement transversal à la rupture: 160%,

- résistance à la désadhérence entre couches:

. substrat/couche barrière: 60 grammes/centimètre de largeur minimum,

. couche barrière/couche interne: 10 grammes par centimètre de largeur minimum,

- rétrécissement libre longitudinal à 85°C: 35% minimum,

- rétrécissement libre transversal à 85%: 25% minimum,

- tension longitudinale de rétrécissement à 65°C: 12-20 daN/cm$^2$,

- tension transversale de rétrécissement à 65°C: 8-20 daN/cm$^2$,

- transparence: 3,5%,

- brillance sous 45°: 70,

- brillance sous 75°: 110,

- perméabilité à l'oxygène (centimètres$^3$/24 heures/ mètre carré. une atmosphère):

. BRUGGER: 35 maximum,

. Ox-tran: 40 maximum,

- transmission de vapeur d'eau (gramme/24 heures/ mètre carré): 12 maximum,

- résistance longitudinale à la propagation de la déchirure: 2 grammes par centimètre de largeur,

- résistance transversale à la propagation de la déchirure:  3 grammes par centimètre de largeur.

Le choix des matières premières et les modalités spécifiques de traitement donnent à la pellicule selon l'invention des caractéristiques particulièrement intéressantes.

Ainsi, par exemple, on a indiqué plus haut que le faible taux de réticulation permet d'obtenir 25% à 40% de sites réticulés, ce qui donne à la pellicule ainsi traitée une moindre résistance à la température.

Un effet spécifique à la pellicule selon l'invention résulte du fait que la couche réticulée 100 se trouve être la couche extérieure à l'emballage et que c'est elle qui subit en premier lieu la chaleur du fluide provoquant la rétraction bi-axiale de la pellicule et son placage sur le produit emballé.

Grâce aux qualités de la couche extérieure (substrat réticulé 100), cette rétraction peut être obtenue avec une température moins élevée que celles qui est nécessaire pour les pellicules connues à ce jour de sorte qu'au lieu d'utiliser obligatoirement pour cette rétraction un bain d'eau chaude, il est possible d'utiliser un tunnel à air chaud dont les effets sont plus faibles que ceux de l'eau chaude et qui ne peuvent donc être utilisés, dans la pratique, qu'avec une pellicule conforme à l'invention.

Un autre avantage essentiel de la présente invention vient du fait que la couche située directement contre le produit à emballer est celle qui doit se souder à elle-même et qui doit présenter le maximum de capacité à l'auto thermo-scellage ce qui est, comme on l'a indiqué plus haut, la faculté de se souder au dessous du point de fusion pendant un temps relativement court et de l'ordre de quelques secondes mais tout de même supérieur au temps utilisé pour le thermo-scudage qui se fait en un ou deux dixièmes de seconde.

Or, ici, précisément, la couche interne qui se trouve directement en contact du produit à conditionner n'a subi aucune réticulation de sorte que sa faculté d'auto thermo-scellage est intacte et qu'elle se soude à elle-même lorsque l'ensemble est chauffé en vue de la rétractation, soit par bain dans un bac à eau chaude, soit par transfert dans un four à air chaud.

On peut alors sans difficulté prévoir plusieurs produits dans un même emballage comme, par exemple, plusieurs saucisses, et même des produits très différents dont certains sont coulants et d'autres pas, car il est aisé d'obtenir l'auto thermo-scellage de la couche interne entre les différents produits, ce qui assure leur isolement hermétique puisque les sortes de "ponts" qui se créent entre ces produits résultent d'un scellage d'excellente qualité lors du traitement par la chaleur qu'exige la rétractation de toute la pellicule.

L'invention n'est pas limitée au seul mode de réalisation décrit et représenté mais en embrasse au contraire toutes les variantes.

24

REVENDICATIONS

1. Pellicule formée d'au moins deux couches associées intimement et de caractéristiques différentes, destinée à constituer une enveloppe thermo-rétractable pour l'emballage de produits notamment alimentaires, du type comprenant au moins une couche (100) dite "substrat" réticulée soit par irradiation, soit par des moyens chimiques et une couche (400) dite "de contact" apte à résister à des efforts mécaniques tels que chocs, frottements et perforations, caractérisée en ce que cette pellicule est conditionnée et présentée de telle manière que la couche de contact non réticulée (400) soit interposée entre le produit à emballer et le substrat (100) qui, ainsi, constitue la face externe de l'emballage.

2. Pellicule selon la revendication 1, caractérisée en ce qu'elle comprend au moins trois couches (100, 300 et 400) dont au moins une (300), ajoutée au substrat (100) et à la couche de contact (400), est une couche d'imperméabilisation dite "barrière" non réticulée qui est interposée entre la couche de contact (400) et ce substrat (100).

3. Pellicule selon la revendication 2, caractérisée en ce que la couche barrière (300) est réalisée à partir d'un copolymère de chlorure de vinylidène additionné d'un plastifiant polymérique dans la proportion d'environ 7 à 12 % et d'un stabilisant dans la proportion d'environ 4 %.

4. Pellicule selon la revendication 2, caractérisée en ce que la couche barrière (300) étant de nature à présenter une certaine incompatibilité avec l'une, au moins, des deux autres couches (100-400), la pellicule comprend une couche de compatibilisation interposée entre la couche barrière (300) et la ou les autres couches (100-400).

5. Pellicule selon la revendication 1, caractérisée en ce que le substrat (100) est réalisé à partir d'un copolymère obtenu par poly-addition irrégulière d'un monomère bi-fonctionnel symétrique du type éthène et d'un monomère bi-fonctionnel asymétrique du type éthanoate de vinyle, avantageusement à raison de 5 à 12 % en poids dudit monomère, ce copolymère extrudé pour réaliser une pellicule, présentant un taux de réticulation inférieur à 50 % et de préférence compris entre 25 et 40 %.

6. Pellicule selon la revendication 1, caractérisée en ce que la couche de contact (400) est obtenue à partir d'un ionomère, c'est-à-dire un dérivé de copolymères d'éthylène et d'acide méthacrylique auquel est greffé latéralement un composé contenant un cation métallique tel que sodium, zinc et analogues, cet ionomère étant éventuellement associé à des additifs tels que glissants, anti-statiques, colorants et autres.

7. Procédé pour l'obtention d'une pellicule formée d'au moins deux couches (100-400, 100-300-400) selon la revendication 1, caractérisé en ce que l'on extrude d'abord le substrat (100) sous forme d'une gaine tubulaire, puis que l'on soumet cette gaine à une opération de réticulation soit par irradiation soit par des moyens chimiques, puis que l'on extrude à l'extérieur de la gaine tubulaire de substrat (100) une deuxième gaine de couche de contact (400) ainsi qu'éventuellement une troisième couche de protection (300) dite "barrière", soit en même temps que la couche de contact (400), soit après, puis qu'après obtention d'une telle gaine à au moins deux couches (100-400, 100-300-400) grâce à des opérations associées de tout type connu, on étire ladite gaine dans les deux directions du plan, notamment par dilatation, puis, qu'après stockage sous forme de bobines (602) et transport éventuel, on fend ladite gaine (601) selon au moins une de deux génératrices opposées afin de la disposer à plat, puis l'on utilise la gaine (601) ainsi fendue en nappe soit simple (700) soit double (800) après inversion des faces de la nappe, de telle sorte que le substrat (100) jusqu'alors à l'intérieur de la gaine (601) soit dorénavant destiné à être à l'extérieur de l'enveloppe obtenue à partir de la nappe et qu'à la fois la couche de contact (400) jusqu'alors à l'extérieur de la gaine (601) soit dorénavant destinée à être à l'intérieur de l'enveloppe obtenue à partir de la nappe, c'est-à-dire au contact des produits à envelopper.

8. Procédé selon la revendication 7, caractérisé en ce que la gaine (601) est fendue selon deux génératrices opposées, notamment le long de plis formés pour sa mise sur bobine, puis chacune des deux nappes simples (700a et 700b) ainsi formées est mise sur bobine éventuellement après découpage longitudinal en au moins deux lés (708).

9. Procédé selon la revendication 7, caractérisé en ce que la gaine (601) est fendue selon une seule génératrice, notamment le long de l'un des plis formés par sa mise sur bobine (602), puis est mise à plat, puis est repliée longitudinalement sur elle-même pour obtenir une nappe double dont la face intérieure est la couche de contact (400) qui était à l'extérieur de la gaine (601) et dont la face extérieure est le substrat (100) qui était à l'intérieur de la gaine (601), cette nappe double étant soudée et fractionnée transversalement pour constituer des enveloppes (800) fermées sur trois côtés et ouvertes sur le côté correspondant aux lèvres créées lorsque l'on a fendu la gaine (601).

10. Procédé selon la revendication 9, caractérisé en ce que la nappe double est obtenue par pliage longitudinal asymétrique pour que les deux lèvres créées lorsque l'on a fendu la gaine (601) soient décalées transversalement par rapport à l'axe longitudinal de la nappe.

Fig. 1

**Fig. 2**

**Fig. 3**

Office européen
des brevets

**RAPPORT DE RECHERCHE EUROPEENNE**

Numéro de la demande

EP 81 40 1718

| | **DOCUMENTS CONSIDERES COMME PERTINENTS** | | | CLASSEMENT DE LA DEMANDE (Int. Cl. ³) |
|---|---|---|---|---|
| Catégorie | Citation du document avec indication, en cas de besoin, des parties pertinentes | Revendica-tion concernée | | |
| X | <u>GB - A - 1 591 424</u> (W.R. GRACE)<br><br>* revendications 1,5-8, 13-25; page 2, ligne 15 - page 3, ligne 128; page 4, ligne 60 - page 6, ligne 27; figures 1,2 *<br><br>& DE - A - 2 744 713<br><br>-- | 1-7 | | B 32 B 27/08<br>B 65 D 65/40<br>B 32 B 31/28 |
| A | <u>FR - A - 2 132 400</u> (RAYCHEM)<br><br>* page 10, lignes 14-32 *<br><br>-- | 7,9 | | DOMAINES TECHNIQUES RECHERCHES (Int. Cl. ³)<br><br>B 32 B |
| | <u>GB - A - 1 033 959</u> (RAYCHEM)<br><br>* revendications 1-8, 12, 22, 25-34, 43-51; page 1, ligne 59 - page 3, ligne 52; page 4, ligne 37 - page 5, ligne 42; figures 1-3 *<br><br>-- | 1,7 | | |
| | <u>FR - A - 2 009 087</u> (RAYCHEM)<br><br>* revendications 1,3,7-9,13,14; page 1, ligne 24 - page 2, ligne 38; page 5, ligne 33 - page 8, ligne 15; page 10, ligne 3 - page 12, ligne 37; figures 1,2 *<br><br>-- | 1,2,5 7 | | CATEGORIE DES DOCUMENTS CITES |
| A | <u>FR - A - 2 445 212</u> (W.R. GRACE)<br><br>----- | | | X: particulièrement pertinent à lui seul<br>Y: particulièrement pertinent en combinaison avec un autre document de la même catégorie<br>A: arrière-plan technologique<br>O: divulgation non-écrite<br>P: document intercalaire<br>T: théorie ou principe à la base de l'invention<br>E: document de brevet antérieur, mais publié à la date de dépôt ou après cette date<br>D: cité dans la demande<br>L: cité pour d'autres raisons |

&: membre de la même famille, document correspondant

Le présent rapport de recherche a été établi pour toutes les revendications

| Lieu de la recherche | Date d'achèvement de la recherche | Examinateur |
|---|---|---|
| La Haye | 22-01-1982 | BLASBAND |

OEB Form 1503.1   06.78